# EUROPÄISCHE PATENTSCHRIFT

(11) **EP 2 065 260 B1**
(45) Veröffentlichungstag und Bekanntmachung des Hinweises auf die Patenterteilung: **26.09.2012**
(21) Anmeldenummer: 08169103.2
(22) Anmeldetag: 14.11.2008
(51) Int. Cl.: B60R 13/04

(54) **Türkantenschutzeinrichtung**
Door edge protection device
Dispositif de protection de bordure de portière

(30) Priorität: 01.12.2007 DE 102007057936
(43) Veröffentlichungstag der Anmeldung: 03.06.2009
(73) Patentinhaber: Ford-Werke GmbH, 50735 Köln (DE)
(72) Erfinder: Benderoth, Thomas, 51647, Gummersbach (DE); Lichter, Martin, 50374, Erftstadt (DE); Lopes dos Santos, Armando, 50737, Köln (DE)
(74) Vertreter: Dörfler, Thomas

(56) Entgegenhaltungen:
- DE-A1- 10 124 810
- DE-A1-102005 026 937
- US-A- 2 678 232
- US-A- 4 839 991

## Beschreibung

Die vorliegende Erfindung betrifft eine Türkantenschutzeinrichtung für Kraftfahrzeugtüren gemäß dem Oberbegriff des Anspruchs 1.

Derartige Kantenschutzeinrichtungen weisen Kantenschutzkörper auf, die innerhalb des Türkörpers in der Nähe der öffnenden Türkante angeordnet sind und beim Öffnen der Tür um die Türkante herum schwenken und diese umgreifen, so dass die Türkante beim weiteren Öffnen vor Stößen gegen benachbarte Fahrzeuge oder andere Hindernisse wie Bäume, Mauern, etc. vor einer Beschädigung geschützt ist.

Derartige Kantenschutzkörpereinrichtungen sind beispielsweise in den US 4,221,411, DE 19934404, DE 10215903, DE 102004031798 und WO 2005/021305 offenbart. Nachteilig bei diesen bekannten Kantenschutzeinrichtungen ist, dass der Kantenschutzkörper beim Ausfahren aus der Ruheposition - bei geschlossener Tür - beim Öffnen der Tür überwiegend eine annähernd 180°-Drehung um eine Achse parallel zur Türkante oder parallel zur Fahrzeuglängsachse ausführt. Da die Türkante einer Kfz-Tür aber regelmäßig nicht gerade sondern geschwungen ausgebildet ist, können bei den bekannten Vorrichtungen die Kantenschutzkörper nicht mit einer an die Kantenkontur angepassten länglichen Kontur ausgebildet werden, sondern können nur einen eng begrenzten Bereich der Kante schützen. Darüber hinaus handelt es sich zum Teil um aufwendige und Raum beanspruchende Konstruktionen.

Aus der DE 9405958 U1 ist eine Kantenschutzvorrichtung bekannt, bei der das Kantenschutzprofil zweifach gelagert ist, wobei die der Türkante abgewandte Lagerung eine Linearführung ist, die gleichzeitig dem Antrieb des Kantenschutzprofiles dient, während die der Türkante zugewandte Lagerung mittels eines an der Tür gelagerten Zwischenhebels erfolgt, der bei der Vor-Zurückbewegung des Antriebs eine Schwenkbewegung des Kantenschutzprofiles um die Türkante bewirkt. Nachteilig ist hier, daß die Schwenkbewegung es nicht erlaubt, das Kantenschutzprofils um die gesamte Türkante herum zu bewegen, da der Zwischenhebel, bedingt durch den linearen Antrieb, lediglich eine Schwenkbewegung von kleiner 180° ausführen kann. Dieses Umfassen der Türkante durch das Türkantenschutzprofils ist aber notwendig, wenn die Türkante insbesondere bei scharfen Ecken und Kanten, gegen die die Türe geöffnet wird, wirksam geschützt werden soll.

Aus der US 2,678,232 ist eine Türkantenschutzvorrichtung für eine Fahrzeugtür bekannt, bei der ein Türkantenschutzprofil in einer gebogenen Kulissenführung gelagert ist und das Türkantenschutzprofil einen Exzenterhebel aufweist, auf den eine linearer Antrieb mittels einer Druckstange erfolgt. Beim Ausfahren des Türkantenschutzprofils drückt die Druckstange auf den Exzenterhebel, wodurch das Türkantenschutzprofil entlang der Kulisse bis zum Ende verfahren wird und dort aufgrund des Drucks der Druckstange eine abschließende Schwenkbewegung um die zu schützende Türkante ausführt. Die kinematische Anordnung erlaubt jedoch keinen eindeutigen Bewegungsablauf des Türkantenschutzprofils beim Ein- und Ausfahren. In den Zwischenpositionen zwischen den Endlagen ist einem Verfahrweg in der Kulisse keine eindeutige Drehung des Türkantenschutzprofils zugeordnet. Die endgültige Schutzposition wird erst durch die abschließende Schwenkbewegung erreicht, wobei die Schwenkbewegung auch schon vor Erreichen der Schutzposition erfolgen kann. In solchen Fällen ist eine sichere Umgreifung der Türkante durch das Türkantenschutzprofil nicht gewährleistet.

Aufgabe der Erfindung ist es, die Nachteile aus dem Stand der Technik zu überwinden.

Indem das Türkantenschutzprofil über einen in der Tür drehbar gelagerten Exzenterhebel angetrieben wird, kann sich das Türkantenschutzprofil im wesentlichen raumrichtungsfest und überwiegend translatorisch auf einer vorbestimmten Bahn bewegen und gleichzeitig auch die Vorwärts- und Rückwärts-bewegung ausführen, die notwendig ist, die äußere Türkante in der Schutzposition zu umfassen.

Die im wesentlichen raumrichtungsfeste und überwiegend translatorische Bewegung ergibt sich aus der zweifachen Führung des Türkantenschutzes in der Tür an den zwei in Längsrichtung der Tür hintereinanderliegenden Stellen. Dabei bedeutet Längsrichtung der Tür im wesentlichen die parallele Ausrichtung zur Außenseite der Tür und quer zur schützenden Türkante. Im Falle einer Fahrzeugseitentür entspricht die Längsrichtung ungefähr der Fahrtrichtung, wenn die Tür an einer Säule mit Scharnieren gelagert ist und die zu schützenden Türkante gegenüber den Scharnieren liegt und annähernd senkrecht verläuft. Bei einer Heckklappe entspricht die Längsrichtung der Vertikalen (im geschlossenen Zustand), wenn die Heckklappe am Dachrahmen mit Scharnieren gelagert ist und die zu schützenden Türkante die Unterkante der Heckklappe ist. Bei seitlich angeschlagenen Heckklappen wäre die Längsrichtung die Horizontale quer zur Fahrrichtung, wenn die senkrechte Türkante der Hecktür zu schützen ist.

Die Vorwärts- und Rückwärtsbewegung wird erzeugt, indem der Exzenterhebel über eine Endlage parallel zur Längsrichtung der Tür verdreht wird. Durch die Drehlagerung des Exzenterhebels in der Tür ergibt sich damit auf der anderen Seite des Exzenterhebels automatische die erwähnte Vorwärts-Rückwärtsbewegung, wenn diese Seite das Türkantenschutzprofil antreibt.

Damit kann das Türkantenschutzprofil der Kontur der Türkante über einen großen Abschnitt der Türkante angepasst werden und kann trotzdem sowohl platzsparend an oder in der Tür untergebracht sein als auch platzsparend in Schutzposition verfahren werden. Der erfinderische Türkantenschutz schützt die Türkante über einen weitaus größeren Bereich als bisherige Schutzprofile und benötigt doch nur einen geringen Einbauraum.

Beim Ausfahren selber ist der benötigte Raum für die Bewegung ebenfalls auf ein Minimum begrenzt, da die überwiegend translatorische Bewegung, die sich aus der zweifachen Führung des Türkantenschutzprofils ergibt, einen geringen Verfahrweg erlaubt, der benötigt wird, um das Türkantenschutzprofil von der Ruheposition in die Schutzposition zu verfahren.

Das Türkantenschutzprofil ist an der Tür mittels des Exzenterhebels geführt. Damit übernimmt der Exzenterhebel die Aufgabe der Führung und des Antriebs des Türkantenschutzprofils. Dabei wird über einen Exzenterbolzen die Verbindung zwischen Türkantenschutzprofil und Exzenterhebel hergestellt werden. Das Türkantenschutzprofil folgt im wesentlichen der Drehbewegung des Exzenterhebels, dreht selber aber nicht, sondern erfährt als resultierende Bewegung eine Schwenkbewegung, die abhängig von der zweiten Führung ist und um die Türkante geführt ist.

Üblicherweise führt der Exzenterhebel eine Drehbewegung von mindestens 180° und höchstens 360° aus. Die 180° sind erforderlich, um die Vor- und Rückwärtsbewegung zu erhalten, die für das Umfassen der Türkante in der Schutzposition erforderlich ist. Ein größerer Drehwinkel des Exzenterhebels als 360° ist sinnvoll, wenn das Türkantenschutzprofile über zwei Führungen verfügt, die trotz der Volldrehung des Exzenterhebels die Türkantenschutzprofil von der Ruheposition in die Schutzposition bringen. Vorteilhaft liegt der Drehwinkel zwischen 250° und 290°, insbesondere dann, wenn der Exzenterhebel auch die vordere Führung des Türkantenschutzprofils übernimmt. Mit "vorderer Führung" ist dabei die Führung gemeint, die näher an der zu schützenden Türkante liegt als die in Längsrichtung dahinterliegende zweite Führung, hier genannt die "hintere Führung". Damit kann das Türkantenschutzprofil aus der Ruheposition an oder in der Tür in die Schutzposition um die Türkante herum verfahren werden.

In einer vorteilhaften Ausführung wird das Türkantenschutzprofil durch zwei in Längsrichtung des Fahrzeugs hintereinander angeordnete Exzenterhebel geführt. Dann ergibt sich die Schwenkbewegung des Türkantenprofils in die Schutzposition recht einfach, wenn die beiden Exzenterhebel getrieblich gekoppelt sind. Handelt es sich um eine direkte getriebliche Kopplung ohne Über- oder Untersetzung und sind die Geometrie der Ankopplung an das Türkantenprofil für beide Exzenterhebel identisch, so bewirkt die simultane Verdrehung der beiden Exzenterhebel eine reine parallele, translatorische Verschiebung des Türkantenschutzprofils.

Weicht man von dieser identischen Auslegung der Exzenterhebel ab, so wird je nach getrieblicher Kopplung und Anordnung der Exzenterbolzens neben der translatorischen Bewegung eine leichte Drehung des Türkantenschutzprofils bewirkt werden. Damit erlauben die beiden Exzenterhebel eine weite Anpassung der Schwenkbewegung des Türkantenschutzprofils, damit das Türkantenschutzprofil möglichst schnell und sicher die Schutzposition erreicht. Wenn die beiden Exzenterhebel nicht identisch sind, muß eine Verbindung der Exzenterbolzen zum Türkantenschutzprofil spielbehaftet sein, damit es nicht zu einer getrieblichen Blockade von Exzenter hebeln und Türkantenschutzprofil kommt.

Die betriebliche Kopplung der beiden Exzenterhebel kann über ein Zahnradgetriebe erfolgen, indem beide Exzenterhebel mit einem Zahnrad fest verbunden sind und diese beiden Zahnräder über mindestens ein Zwischenzahnrad wiederum getrieblich in Verbindung stehen. Je nach Zähnezahl kann dabei eine gleichförmige Bewegung der beiden Exzenterhebel oder eine gegeneinander unter- bzw. übersetzte Drehbewegung der Exzenterhebel erfolgen. Statt eines Zwischenzahnrades kann auch eine Zahnstange diese Kopplung übernehmen, die gleichzeitig auch noch dem Antrieb dienen kann.

In einer weiteren Ausführung sind beiden Exzenterhebel über eine Treibstange getrieblich gekoppelt sind. Diese ermöglicht eine einfache mechanische Kopplung der beiden Exzenterhebel, wobei die Bewegung der beiden Exzenterhebel gleichförmig gekoppelt sein kann, was eine annährend translatorische Bewegung des Türkantenschutzprofils bewirkt. Eine zusätzliche rotatorische Bewegung des Türkantenschutzprofils kann erzeugt werden indem die Treibstange mit unterschiedlichen Radien und/oder unterschiedlichen Winkeln relativ zu den Exzenterhebeln angeordnet ist.

Für den Antrieb des Exzenterhebels sind viele Ausführungen möglich, von denen einige vorteilhafte im Folgenden beschrieben sind. Diese Beispiele sind nicht vollständig, vielmehr sind alle Antriebe geeignet, die auf den Exzenterhebel ein Drehmoment aufbringen und damit eine Verdrehung desselben bewirken

Vorteilhaft weist der Exzenterhebel eine Exzenterachse auf, auf die der Antrieb wirkt. Dann läßt sich der Antrieb von einer Position auf den Exzenterhebel aufbringen, die auch außerhalb der Verfahrmechanik angebracht sein kann.

Der Antrieb des Exzenterhebels kann über eine Zahnstange erfolgen, die auf ein mit dem Exzenterhebel verbundenes Zahnrad wirkt. Dabei kann das Zahnrad auch über eine Exzenterachse mit dem Exzenterhebel verbunden sein. Der antrieb kann auch direkt auf dieses Zahnrad erfolgen, durch einen geeigneten Aktuator, Motor etc.

In einer möglichen Ausführung wird der Exzenterhebel oder die Exzenterachse über eine Schubstange und/oder einen Bowdenzug angetrieben.

Der Exzenterhebel kann aber auch durch einen Elektromotor angetrieben werden, sowohl auf der Exzenterachse als auch an jede andere Stelle. Der Elektromotor kann dabei auch über die oben genannten Antriebsvarianten, z. B. das Zahnrad, auf den Exzenterhebel den Antrieb bewirken.

Die hier beschriebenen Antriebe stellen besonders vorteilhafte Ausführungen dar. Es versteht sich von selbst daß der Antrieb des Türkantenschutzprofils durch alle anderen geeigneten Aktuatoren erfolgen kann, d. h. pneumatische, elektrische, hydraulische oder mechanische Aktuatoren. Ein mechanischer Aktuator kann z. B. die Türöffnungsbewegung als Antriebsenergie ausnutzen, wie weiter unten als beispielhafte Antriebseinheit beschrieben. Weiterhin können die Aktuatoren auf jede geeignete Weise auf den Exzenterhebel direkt oder indirekt, z. B. über Bowdenzüge, Schubstangen, Exzenterachse etc. wirken.

In einer weiteren Ausführung wird das Türkantenschutzprofil gegen eine sich spannende Feder angetrieben. Damit ist nur ein Antrieb in eine Richtung notwendig, z. B. um das Türkantenschutzprofil in die Schutzposition zu verfahren. Beim Türenschließen wird das Türkantenschutzprofil durch die resultierende Federkraft bewegt und in die Ruheposition verfahren.

Die Feder kann auf die Exzenterachse wirken, indem die Drehung der Exzenterachse als Torsionsenergie in der Feder gespeichert wird. Dies erlaubt eine sehr kompakte Anordnung der Feder.

In einer weitern Ausführung wird das Türkantenschutzprofil bei seiner Bewegung durch mindestens eine Kulisse, z. B. durch zwei Kulissen geführt. Kulissenführungen ermöglichen ebenfalls eine überwiegend translatorische Verschiebung des Türkantenschutzprofils aus der Ruheposition in die Schutzposition. Durch den Antrieb mit dem Exzenterhebel kann das Türkantenschutzprofil auch die von der Kulisse vorgegebene Umfassungsbewegung um die Türkante vollführen. Im Falle von z. B. zwei Kulissen ist ggf. eine spielbehaftete Kopplung zwischen Exzenterhebel und Türkantenschutzprofil sinnvoll, und zwar derart, daß der Antrieb in der Kulisse gewährleistet ist und trotzdem keine Verspannung zwischen den Bauteilen auftritt.

Weiterhin kann das Türkantenschutzprofil bei seiner Bewegung durch eine in der Tür feststehende Gleitführung geführt wird. Dies ist insbesondere vorteilhaft in Verbindung mit einer oben beschriebenen Exzenter- und/oder Kulissenführung. Damit kann an einem Ende das Türkantenschutzprofil gleichmäßig in der Türe geführt sein, während am anderen Ende das Türkantenschutzprofil die erforderliche Schwenkbewegung durch den Exzenterhebel und/oder die Kulisse erfährt.

Bei einer Ausführung kann das Türkantenschutzprofil innerhalb der Tür mit einem Scharnier an einem Exzenterhebel geführt werden. Dabei kann eine Änderung der Raumrichtung des Türkantenschutzprofils in einer horizontalen Ebene von bis zu 20° um eine in der Tür feststehende Gleitführung in Kauf genommen werden. Eine besonders günstige Konfiguration wird dadurch erreicht, dass die erste Führung durch den Exzenterhebel innerhalb der Tür weiter vom Schutzprofil entfernt angeordnet ist und die zweite Führung durch eine Gleitführung in der Nähe des stirnseitigen Austritts aus dem Türkasten angeordnet ist. In diesem Fall ist die Querbewegung des Türkantenschutzprofils minimal, so dass die Austrittsöffnung aus dem Türkasten minimal gestaltet werden kann.

Bei der Ausführung mit einer Gleitführung kann das Türkantenschutzprofil eine gebogene Gleitschiene aufweisen, die in der Gleitführung gelagert ist, und die durch die gebogene Form die oben beschriebene Schwenkbewegung, resultierend aus der Kulissen- und/oder Exzenterführung, unterstützt.

In einer weiteren Ausführung ist das Türkantenschutzprofil von einer Gleitstange geführt, indem Türkantenschutzprofil und Gleitstange gelenkig verbunden sind und die Gleitstange überwiegend längsverschieblich in der Tür gelagert ist. Dies Art der Führung ist z. B. aus der DE 9405958 U1 bekannt. Vorteilhaft ist dabei die hintere Führung mit der Gleitstange ausgeführt, während die vordere Führung durch einen Exzenterhebel oder einer Kulisse erfolgt.

In einer vorteilhaften Ausführung umfaßt das Türkantenschutzprofil eine elastische Haltestange. Dann kann das Türkantenschutzprofile gegenüber den Führungen eine elastische, reversible Bewegung durchführen, ohne daß es beschädigt wird. Insbesondere wenn das Ausfahren des Türkantenschutzprofils durch ein Hindernis blockiert wird, wird eine Beschädigung des Türkantenprofils und/oder der Mechanik der Schutzvorrichtung verhindert.

Eine ähnliche Wirkung wird erzielt, wenn das Türkantenschutzprofil im Bereich der Haltestange lösbar befestigt ist. Dann kann bei einer Überlast, die auf das Türkantenschutzprofil beim Ausfahren, z. B. durch ein Blockieren, wirkt, das Türkantenschutzprofil sich von der Mechanik der Schutzvorrichtung lösen. Vorteilhaft ist diese lösbare Verbindung so gestaltet, daß das Türkantenschutzprofil nach dem Lösen wieder ohne weitere Hilfsmittel mit der Mechanik verbunden werden kann. Dies kann z. B. realisiert werden, indem die Haltestange zweiteilig ausgeführt ist und der mit der Mechanik verbundene Teil der Haltestange den mit dem Türkantenschutzprofil verbunden Teil der Haltestange mit einer gewissen Vorspannung einklemmt. Diese Klemmung läßt die beiden Teile bei Überlast sich voneinander lösen. Danach werden die beiden Teile mit geringem Kraftaufwand und ohne Werkzeug wieder ineinander geklemmt.

Bevorzugt umfaßt die Schutzeinrichtung eine Antriebseinheit, die vom Öffnungsgrad der Tür gesteuert wird. Dabei kann die Steuerung und/oder der Antrieb mechanisch, elektrisch/elektronisch, pneumatisch oder durch sonstige geeignete Steuerungen/Aktuatoren erfolgen. Aufgabe der Antriebseinheit ist es dabei, zum frühestmöglichen Zeitpunkt beim Öffnen der Tür, d. h. bei dem kleinstmöglichen Öffnungswinkel der Tür bereits einen Antrieb bereitzustellen, um das Türkantenschutzprofil möglichst schnell in die Schutzposition zu bewegen. Dies ist deshalb sinnvoll, weil die Türkante auch bei kleinen Türöffnungswinkeln bereits geschützt sein soll, z. B. bei engen Parklücken oder wenn das Fahrzeug sehr knapp an einer Mauer etc. geparkt ist und ein Fahrzeuginsasse die Tür unachtsam öffnet.

Vorteilhaft umfasst die Schutzvorrichtung eine Antriebseinheit für den Antrieb des Exzenterhebels, die vom Öffnungsgrad der Tür gesteuert wird. Damit wird unmittelbar ein Bezug zwischen dem Türöffnungswinkel und dem Verfahren des Türkantenschutzprofils aus der Ruheposition in die Schutzposition hergestellt.

Vorteilhaft stellt die Antriebseinheit den Antrieb zwischen einem ersten Türöffnungswinkel und einem zweiten Türöffnungswinkel bereit, wobei der erste Türöffnungswinkel zwischen 0° bis 15°, insbesondere 4° bis 6°, und der zweite Türöffnungswinkel zwischen 12° bis 30°, insbesondere 14° bis 16°, betragen sollte. Das Türkantenschutzprofil beginnt seine Schwenkbewegung bei Erreichen des ersten Türöffnungswinkels und beendet bei Erreichen des zweiten Türöffnungswinkels die Schwenkbewegung, so daß die Türkante über eine weiten Winkelbereich beim weiteren Öffnen geschützt ist.

Die Erfindung wird nachfolgend anhand der beigefügten Figuren näher erläutert, wobei gleiche Bezugszeichen in den Figuren gleiche Elemente, soweit nicht anders angegeben, bezeichnen. Es zeigen:
- Fig. 1: eine schematische Ausführungsform mit zwei Exzenterhebeln in vier verschiedenen Bewegungsphasen a), b), c) und d);
- Fig. 2: eine perspektivische Ansicht einer Ausführung der Erfindung gemäß Fig. 1;
- Fig. 3: eine schematische Ausführungsform mit einem Exzenterhebel und einer Gleitführung;
- Fig. 4: eine weitere schematische Ausführungsform mit einem Exzenterhebel und einer Gleitführung; und
- Fig. 5: eine schematische Ausführungsform mit einem Exzenterhebel und einer Kulissenführung in vier verschiedenen Bewegungsphasen a), b), c) und d).

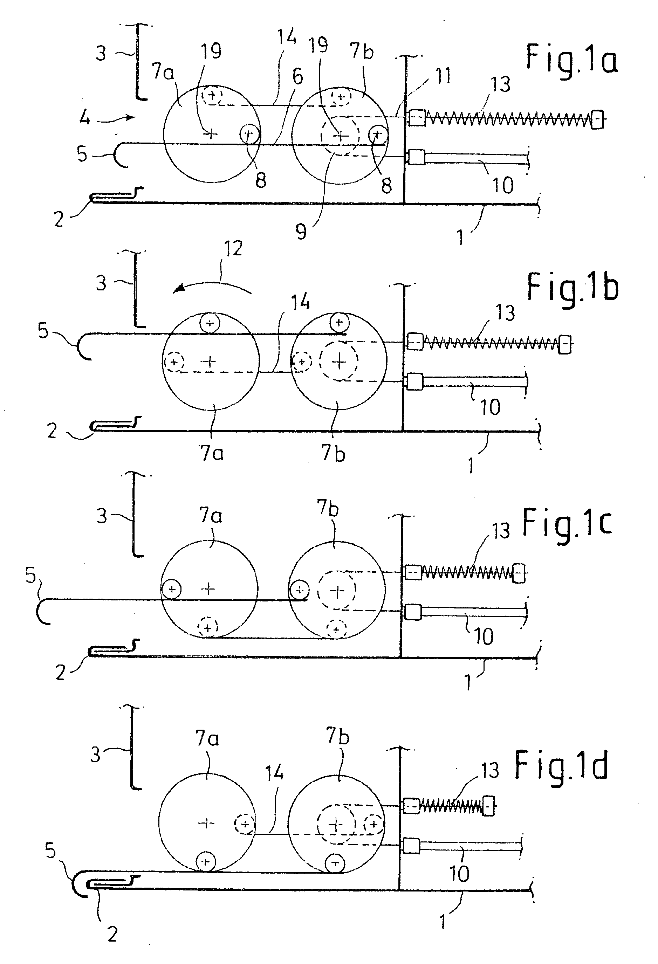

In Fig. 1 ist das Türaußenblech 1 mit der zu schützenden Türkante 2 und der Stirnseite 3 der Tür schematisch angedeutet. Die Stirnseite 3 weist eine Öffnung 4 auf, durch die das Türkantenschutzprofil 5 herausragt. Bei geschlossener Tür (Fig. 1a) ist das Türkantenschutzprofil 5 von außen gesehen durch die Türkante 2 verdeckt. Das Türkantenschutzprofil 5 weist eine Haltestange 6 auf, die mit den Exzenterhebeln 7a und 7b über die Exzenterbolzen 8 verbunden ist. Die Exzenterhebel7a, 7b sind über die Exzenterachse 19 drehbar in der Tür gelagert. Über die um 90° gegenüber den Exzenterhebeln 7a, 7b angeordnete Treibstange 14 erfolgt eine weitere getriebliche Verbindung der beiden Exzenterhebel 7a, 7b zur Überwindung des Totpunktes des selbst nicht angetriebenen Exzenterhebel 7a in den Stellungen gemäß Fig. 1a) und 1d). Dadurch ist sichergestellt, daß die Exzenterhebel 7a, 7b sich bei allen Drehwinkeln gleichmäßig drehen. Durch diese Anordnung führt das Türkantenschutzprofil 5 eine translatorische Schwenkbewegung aus, ohne seine Richtung im Raum wesentlich zu verändern.

Unterhalb des Exzenterhebels 7b befindet sich eine Seiltrommel 9, über die der Exzenterhebel 7b mittels des Bowdenzugs 10 angetrieben wird. Durch Zug am Bowdenzug 10 dreht sich der Exzenterhebel 7b in Richtung des Pfeils 12. Ein Seil 11 umschlingt die Seiltrommel 9 und wirkt mit seinem Ende auf die Feder 13. Wenn der Bowdenzug 10 zieht und die Seiltrommel 9 dreht, wird über das sich aufwickelnde Seil 11 gleichzeitig die Feder 13 gespannt. Läßt der Zug im Bowdenzug 10 nach, zieht die Feder 13 das Seil 11 und damit den Exzenterhebel 7b wieder in die Ausgangslage zurück.

Der vom Türöffnungsgrad abhängige Antrieb für den Bowdenzug 10 ist so eingerichtet, dass erst nach Öffnung der Tür um einen Winkel von 0 bis 15° Zug auf den Bowdenzug 10 kommt. Beim weiteren Öffnen der Tür durchläuft das Kantenschutzprofil 5 die in Fig. 1b) und c) dargestellten Phasen. In der Stellung der Fig. 1 d) hat das Kantenschutzprofil 5 seine Endstellung erreicht, in der es die Türkante 2 umgreift. Der vom Türöffnungsgrad abhängige Antrieb ist so eingerichtet, dass diese Stellung bei einem Türöffnungswinkel von 12 bis 30° erreicht ist und beim weiteren Öffnen der Tür kein zusätzlicher Zug mehr auf den Bowdenzug 10 ausgeübt wird.

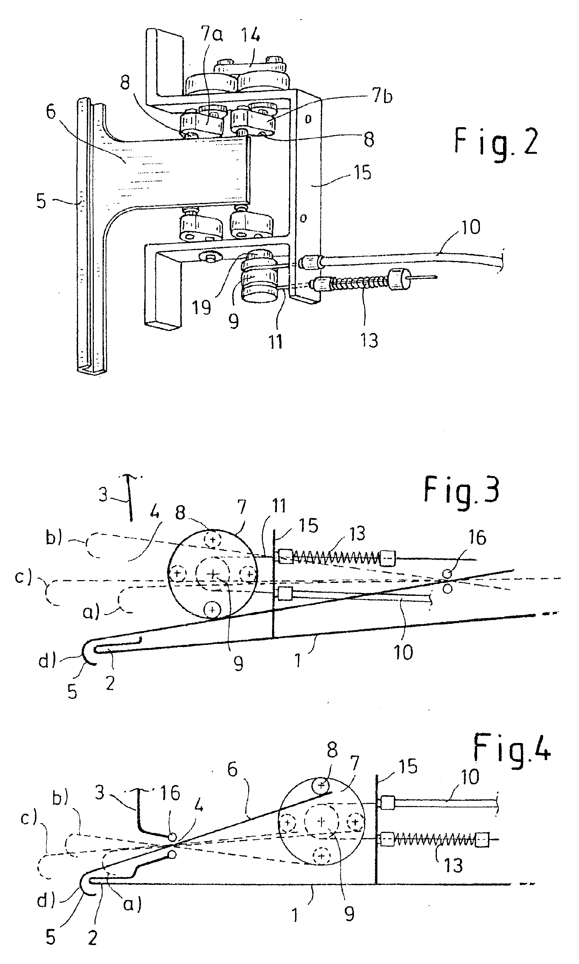

Fig. 2 zeigt eine perspektivische Ansicht einer Ausführung der Erfindung gemäß Fig. 1, wobei die beschriebenen Elemente in dem Montagerahmen 15 angeordnet sind und die Tür selbst nicht dargestellt ist.

Fig. 3 zeigt eine alternative Ausführungsform der Erfindung, bei der nur ein Exzenterhebel 7 als vordere Führung vorgesehen ist und der andere Exzenterhebel durch eine Gleitführung 16 als hintere Führung ersetzt ist. Die Bewegungsphasen a), b) und c) des Türkantenschutzprofils 5 gemäß Fig. 1 sind gestrichelt dargestellt. Das Kantenschutzprofil beschreibt eine leicht elliptische Bahn, wobei eine leichte Variation der Orientierung im Raum stattfindet.

Fig.4 zeigt eine weitere alternative Ausführungsform ähnlich der gemäß Fig. 3, wobei die Gleitführung 16 an der Ausgangsöffnung 4 an der Stirnseite 3 des Türkastens als vordere Führung und der Exzenterhebel 7 innen im Türkasten als hintere Führung angeordnet sind.

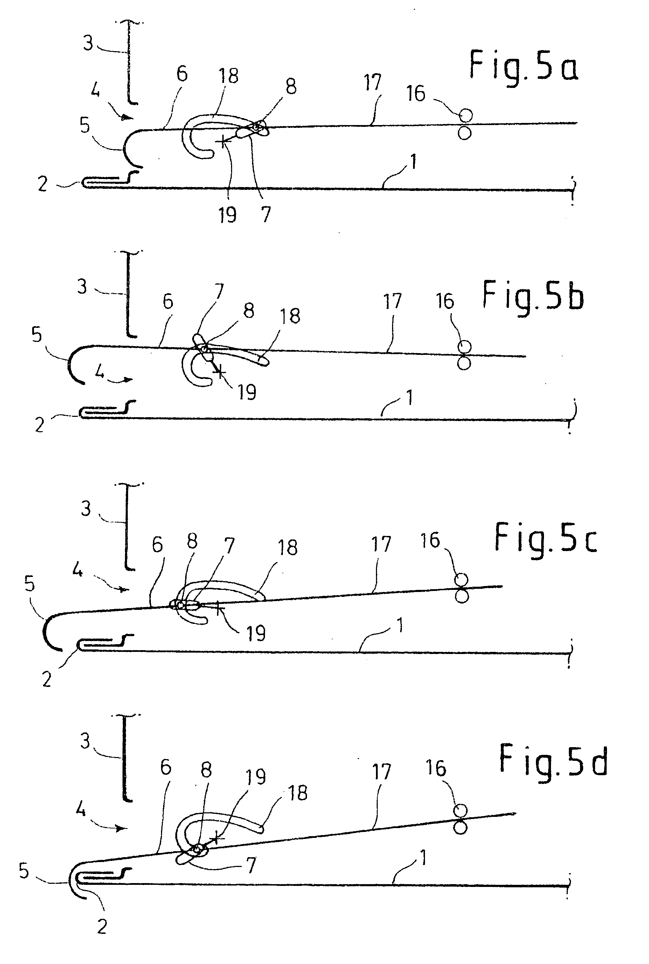

Die in Figur 5 in vier verschiedenen Bewegungsphasen a), b), c) und d) gezeigte schematische Ausführungsform weist als vordere Führung eine Kulisse 18 und als hintere Führung eine Gleitführung 16 auf. In der Kulisse 18 wird das Kantenschutzprofil 5 mit dem Exzenterbolzen 8 und in der Gleitführung 16 mittels der Gleitschiene 17 geführt. Der Antrieb erfolgt über den auf der Exzenterachse 19 gelagerten Exzenterhebel 7. Damit keine mechanische Blockierung auftritt, ist der Exzenterbolzen 8 in einem radialen Schlitz im Exzenterhebel 7 gelagert, so daß die sich aus der Führung der Kulisse 18 ergebenden unterschiedlichen Abstände des Exzenterbolzens 8 zur Exzenterachse 19 ausgeglichen werden können, indem sich der Exzenterbolzen 8 radial im Schlitz des Exzenterhebels 7 verschiebt.

In Figur 5 befindet sich des Kantenschutzprofil 5 zunächst in der Ruheposition a). Durch die Drehung des Exzenterhebels 7 wird das Kanteschutzprofil 5 über die Stellungen b) und c) in die Schutzposition d) verfahren. Die Kulissenführung ermöglicht ein sehr platzsparendes Verfahren des Kantenschutzprofils 5 aus der Ruhposition in die Schutzposition, und der Antrieb über den Exzenterhebel 7 ermöglicht das Umfassen der Türkante 2 durch das Kantenschutzprofil 5, indem die Rückwärtsbewegung in der Kulisse zischen Position c) und d) ermöglicht wird.

### Bezeichnungsliste

- 1: Türaußenblech
- 2: Türkante
- 3: Stirnseite
- 4: Öffnung
- 5: Türkantenschutzprofil
- 6: Haltestange
- 7, 7a, 7b: Exzenterhebel
- 8: Exzenterbolzen
- 9: Seiltrommel
- 10: Bowdenzug
- 11: Seil
- 12: Richtungspfeil
- 13: Feder
- 14: Treibstange
- 15: Montagerahmen
- 16: Gleitführung
- 17: Gleitschiene
- 18: Kulisse
- 19: Exzenterachse

## Patentansprüche

1. Türkantenschutzeinrichtung an einer Kfz-Tür, mit einem Türkantenschutzprofil (5), welches an zumindest zwei in Längsrichtung der Tür hintereinanderliegenden Stellen gegenüber der Tür beweglich geführt ist, wobei das Türkantenschutzprofil (5) über einen in der Tür drehbar gelagerten Exzenterhebel (7, 7b) angetrieben wird,
**dadurch gekennzeichnet, daß**
der Exzenterhebel (7, 7b) gegenüber dem Türkantenschutzprofil (5) über einen Exzenterbolzen (8) drehbar ist und der Exzenterhebel (7, 7b) über eine Endlage parallel zur Längsrichtung der Tür verdreht wird und damit eine translatorische Vorwärts-Rückwärtsbewegung des Türkantenschutzprofils (5) erzeugt.

2. Schutzeinrichtung nach Anspruch 1, durch gekennzeichnet, daß das Türkantenschutzprofil (5) an der Tür mittels des Exzenterhebels (7, 7a, 7b) geführt wird.

3. Schutzeinrichtung nach Anspruch 2, **dadurch gekennzeichnet, daß** der Exzenterhebel (7) eine Drehbewegung von mindestens 180° und höchstens 360°, insbesondere zwischen 250° und 290°, durchführt.

4. Schutzeinrichtung nach einem der Ansprüche 1 bis 3, **dadurch gekennzeichnet, daß** das Türkantenschutzprofil (5) durch zwei in Längsrichtung der Tür hintereinander angeordnete Exzenterhebel (7a, 7b) geführt wird.

5. Schutzeinrichtung nach Anspruch 4, **dadurch gekennzeichnet, daß** die beiden Exzenterhebel (7a, 7b) getrieblich gekoppelt sind.

6. Schutzeinrichtung nach Anspruch 5, **dadurch gekennzeichnet, daß** die beiden Exzenterhebel (7a, 7b) über ein Zahnradgetriebe getrieblich gekoppelt sind.

7. Schutzeinrichtung nach Anspruch 5, **dadurch gekennzeichnet, daß** die beiden Exzenterhebel (7a, 7b) über Zahnräder und eine Zahnstange getrieblich gekoppelt sind.

8. Schutzeinrichtung nach Anspruch 5, **dadurch gekennzeichnet, daß** die beiden Exzenterhebel (7a, 7b) über eine Treibstange (14) getrieblich gekoppelt sind.

9. Schutzeinrichtung nach einem der vorherigen Ansprüche, **dadurch gekennzeichnet, daß** der Exzenterhebel (7) eine Exzenterachse (19) aufweist, auf die der Antrieb wirkt.

10. Schutzeinrichtung nach einem der vorherigen Ansprüche, **dadurch gekennzeichnet, daß** der Antrieb des Exzenterhebels (7) über eine Zahnstange erfolgt, die auf ein mit dem Exzenterhebel (7) verbundenes Zahnrad wirkt.

11. Schutzeinrichtung nach einem der vorherigen Ansprüche, **dadurch gekennzeichnet, daß** der Antrieb des Exzenterhebels über eine Schubstange oder einen Bowdenzug (10) erfolgt.

12. Schutzeinrichtung nach einem der vorherigen Ansprüche, **dadurch gekennzeichnet, daß** der Antrieb des Exzenterhebels (7) über einen Elektromotor erfolgt.

13. Schutzeinrichtung nach einem der vorherigen Ansprüche, **dadurch gekennzeichnet, daß** das Türkantenschutzprofil (5) gegen eine sich spannende Feder (13) angetrieben wird.

14. Schutzeinrichtung nach Anspruch 13, **dadurch gekennzeichnet, daß** der Exzenterhebel (7) eine Exzenterachse (19) aufweist und die Feder (13) auf die Exzenterachse (19) wirkt.

15. Schutzeinrichtung nach einem der vorherigen Ansprüche, **dadurch gekennzeichnet, daß** das Türkantenschutzprofil (5) durch mindestens eine Kulisse (18) geführt wird.

16. Schutzeinrichtung nach einem der vorherigen Ansprüche, **dadurch gekennzeichnet, daß** das Türkantenschutzprofil (5) durch zwei Kulissen (18a, 18b) geführt wird.

17. Schutzeinrichtung nach einem der vorherigen Ansprüche, **dadurch gekennzeichnet, daß** das Türkantenschutzprofil (5) durch eine in der Tür feststehende Gleitführung (16) geführt wird.

18. Schutzeinrichtung nach einem der vorherigen Ansprüche, **dadurch gekennzeichnet daß** das Türkantenschutzprofil (5) eine gebogene Gleitschiene (17) aufweist, die in der Gleitführung (16) gelagert ist.

19. Schutzeinrichtung nach einem der vorherigen Ansprüche, **dadurch gekennzeichnet, daß** das Türkantenschutzprofil (5) von einer Gleitstange geführt wird, wobei das Türkantenschutzprofil und die Gleitstange gelenkig verbunden sind und die Gleitstange überwiegend längsverschieblich in der Tür gelagert ist.

20. Schutzeinrichtung nach einem der vorherigen Ansprüche, **dadurch gekennzeichnet, daß** das Türkantenschutzprofil (5) eine elastische Haltestange (6) umfaßt.

21. Schutzeinrichtung nach einem der vorherigen Ansprüche, **dadurch gekennzeichnet** das Türkantenschutzprofil (5) im Bereich der Haltestange (6) lösbar befestigt ist.

22. Schutzeinrichtung nach einem der vorherigen Ansprüche, **dadurch gekennzeichnet, daß** diese eine Antriebseinheit für den Antrieb des Exzenterhebels (7) umfasst, die vom Öffnungsgrad der Tür gesteuert wird.

23. Schutzeinrichtung nach Anspruch 22, wobei die Antriebseinheit zwischen einem ersten Türöffnungswinkel und einem zweiten Türöffnungswinkel Antrieb bereitstellt.

24. Schutzeinrichtung nach Anspruch 23, wobei der erste Türöffnungswinkel zwischen 0° bis 15°, insbesondere 4° bis 6°, und der zweite Türöffnungswinkel zwischen 12° bis 30°, insbesondere 14° bis 16°, beträgt.

## Claims

1. Door edge protection device on a motor vehicle door, with a door edge protection profile (5) which is guided movably with respect to the door at at least two points lying one behind the other in the longitudinal direction of the door, the door edge protection profile (5) being driven via an eccentric lever (7, 7b) mounted rotatably in the door, **characterized in that** the eccentric lever (7, 7b) is rotatable with respect to the door edge protection profile (5) via an eccentric pin (8), and the eccentric lever (7, 7b) is rotated through an end position parallel to the longitudinal direction of the door and thereby generates a translational forward/backward movement of the door edge protection profile (5).

2. Protection device according to Claim 1, **characterized in that** the door edge protection profile (5) is guided on the door by means of the eccentric lever (7, 7a, 7b).

3. Protection device according to Claim 2, **characterized in that** the eccentric lever (7) executes a rotational movement of at least 180° and at most 360°, in particular of between 250° and 290°.

4. Protection device according to one of Claims 1 to 3, **characterized in that** the door edge protection profile (5) is guided by two eccentric levers (7a, 7b) arranged one behind the other in the longitudinal direction of the door.

5. Protection device according to Claim 4, **characterized in that** the two eccentric levers (7a, 7b) are transmission-coupled.

6. Protection device according to Claim 5, **characterized in that** the two eccentric levers (7a, 7b) are transmission-coupled via a gearwheel transmission.

7. Protection device according to Claim 5, **characterized in that** the two eccentric levers (7a, 7b) are transmission-coupled via gearwheels and a rack.

8. Protection device according to Claim 5, **characterized in that** the two eccentric levers (7a, 7b) are transmission-coupled via a driving rod (14).

9. Protection device according to one of the preceding claims, **characterized in that** the eccentric lever (7) has an eccentric shaft (19) on which the drive acts.

10. Protection device according to one of the preceding claims, **characterized in that** the drive of the eccentric lever (7) takes place via a rack which acts on a gearwheel connected to the eccentric lever (7).

11. Protection device according to one of the preceding claims, **characterized in that** the drive of the eccentric lever takes place via a push rod or a Bowden cable (10).

12. Protection device according to one of the preceding claims, **characterized in that** the drive of the eccentric lever (7) takes place via an electric motor.

13. Protection device according to one of the preceding claims, **characterized in that** the door edge protection profile (5) is driven counter to a spring (13) which undergoes tension.

14. Protection device according to Claim 13, **characterized in that** the eccentric lever (7) has an eccentric shaft (19) and the spring (13) acts on the eccentric shaft (19).

15. Protection device according to one of the preceding claims, **characterized in that** the door edge protection profile (5) is guided by at least one slotted assembly (18).

16. Protection device according to one of the preceding claims, **characterized in that** the door edge protection profile (5) is guided by two slotted assemblies (18a, 18b).

17. Protection device according to one of the preceding claims, **characterized in that** the door edge protection profile (5) is guided by a sliding guide (16) fixed in the door.

18. Protection device according to one of the preceding claims, **characterized in that** the door edge protection profile (5) has a bent sliding rail (17) which is mounted in the sliding guide (16).

19. Protection device according to one of the preceding claims, **characterized in that** the door edge protection profile (5) is guided by a sliding rod, the door edge protection profile and the sliding rod being connected in an articulated manner, and the sliding rod being mounted in the door so as to be predominantly longitudinally displaceable.

20. Protection device according to one of the preceding claims, **characterized in that** the door edge protection profile (5) comprises an elastic holding rod (6).

21. Protection device according to one of the preceding claims, **characterized in that** the door edge protection profile (5) is fastened releasably in the region of the holding rod (6).

22. Protection device according to one of the preceding claims, **characterized in that** this comprises a drive unit for driving the eccentric lever (7), said drive unit being controlled by the degree of opening of the door.

23. Protection device according to Claim 22, the drive unit providing drive between a first door opening angle and a second door opening angle.

24. Protection device according to Claim 23, the first door opening angle amounting to between 0° and 15 ° , in particular 4° and 6°, and the second door opening angle amounting to between 12° and 30°, in particular 14° and 16°.

## Revendications

1. Dispositif de protection de bordure de portière sur une portière de véhicule automobile, comprenant un profilé de protection de bordure de portière (5) qui est guidé de manière mobile en au moins deux points disposés l'un derrière l'autre dans la direction longitudinale de la portière, le profilé de protection de bordure de portière (5) étant entraîné au moyen d'un levier excentrique (7, 7b) monté rotatif dans la portière,
**caractérisé en ce que**
le levier excentrique (7, 7b) peut tourner par rapport au profilé de protection de bordure de portière (5) au moyen d'un boulon excentré (8), et le levier excentrique (7, 7b) est tourné parallèlement à la direction longitudinale de la portière au-delà d'une position d'extrémité et produit ainsi un mouvement de translation du profilé de protection de bordure de portière (5) vers l'avant et vers l'arrière.

2. Dispositif de protection selon la revendication 1, **caractérisé en ce que** le profilé de protection de bordure de portière (5) est guidé sur la portière au moyen du levier excentrique (7, 7a, 7b).

3. Dispositif de protection selon la revendication 2, **caractérisé en ce que** le levier excentrique (7) effectue un mouvement de rotation d'au moins 180° et d'au plus 360°, en particulier entre 250° et 290°.

4. Dispositif de protection selon l'une quelconque des revendications 1 à 3, **caractérisé en ce que** le profilé de protection de bordure de portière (5) est guidé par deux leviers excentriques (7a, 7b) disposés l'un derrière l'autre dans la direction longitudinale de la portière.

5. Dispositif de protection selon la revendication 4, **caractérisé en ce que** les deux leviers excentriques (7a, 7b) sont accouplés par transmission.

6. Dispositif de protection selon la revendication 5, **caractérisé en ce que** les deux leviers excentriques (7a, 7b) sont accouplés par transmission au moyen d'une transmission à engrenages.

7. Dispositif de protection selon la revendication 5, **caractérisé en ce que** les deux leviers excentriques (7a, 7b) sont accouplés par transmission au moyen de roues dentées et d'une crémaillère.

8. Dispositif de protection selon la revendication 5, **caractérisé en ce que** les deux leviers excentriques (7a, 7b) sont accouplés par transmission au moyen d'une bielle d'entraînement (14).

9. Dispositif de protection selon l'une quelconque des revendications précédentes, **caractérisé en ce que** le levier excentrique (7) comprend un axe excentré (19) sur lequel agit l'entraînement.

10. Dispositif de protection selon l'une quelconque des revendications précédentes, **caractérisé en ce que** l'entraînement du levier excentrique (7) s'effectue au moyen d'une crémaillère qui agit sur une roue dentée reliée au levier excentrique (7).

11. Dispositif de protection selon l'une quelconque des revendications précédentes, **caractérisé en ce que** l'entraînement du levier excentrique s'effectue au moyen d'une bielle de poussée ou d'un câble Bowden (10).

12. Dispositif de protection selon l'une quelconque des revendications précédentes, **caractérisé en ce que** l'entraînement du levier excentrique (7) s'effectue au moyen d'un moteur électrique.

13. Dispositif de protection selon l'une quelconque des revendications précédentes, **caractérisé en ce que** le profilé de protection de bordure de portière (5) est entraîné à l'encontre d'un ressort qui se tend (13).

14. Dispositif de protection selon la revendication 13, **caractérisé en ce que** le levier excentrique (7) comprend un axe excentré (19) et le ressort (13) agit sur l' axe excentré (19).

15. Dispositif de protection selon l'une quelconque des revendications précédentes, **caractérisé en ce que** le profilé de protection de bordure de portière (5) est guidé par au moins une coulisse (18).

16. Dispositif de protection selon l'une quelconque des revendications précédentes, **caractérisé en ce que** le profilé de protection de bordure de portière (5) est guidé par deux coulisses (18a, 18b).

17. Dispositif de protection selon l'une quelconque des revendications précédentes, **caractérisé en ce que** le profilé de protection de bordure de portière (5) est guidé par un guidage coulissant (16) fixe dans la portière.

18. Dispositif de protection selon l'une quelconque des revendications précédentes, **caractérisé en ce que** le profilé de protection de bordure de portière (5) comprend une glissière courbe (17) qui est montée dans le guidage coulissant (16).

19. Dispositif de protection selon l'une quelconque des revendications précédentes, **caractérisé en ce que** le profilé de protection de bordure de portière (5) est guidé par une barre coulissante, le profilé de protection de bordure de portière et la barre coulissante étant reliés de manière articulée et la barre coulissante étant montée dans la portière de manière déplaçable principalement longitudinalement.

20. Dispositif de protection selon l'une quelconque des revendications précédentes, **caractérisé en ce que** le profilé de protection de bordure de portière (5) comporte une barre de retenue élastique (6).

21. Dispositif de protection selon l'une quelconque des revendications précédentes, **caractérisé en ce que** le profilé de protection de bordure de portière (5) est fixé de manière amovible dans la région de la barre de retenue (6).

22. Dispositif de protection selon l'une quelconque des revendications précédentes, **caractérisé en ce qu'**il comporte une unité d'entraînement pour l'entraînement du levier excentrique (7), laquelle unité d'entraînement est commandée par le degré d'ouverture de la portière.

23. Dispositif de protection selon la revendication 22, dans lequel l'unité d'entraînement fournit un entraînement entre un premier angle d'ouverture de portière et un deuxième angle d'ouverture de portière.

24. Dispositif de protection selon la revendication 23, dans lequel le premier angle d'ouverture de portière vaut entre 0° et 15°, en particulier entre 4° et 6°, et le deuxième angle d'ouverture de portière vaut entre 12° et 30°, en particulier entre 14° et 16°.
